# EUROPÄISCHE PATENTSCHRIFT

(11) **EP 0 824 198 B1**
(45) Veröffentlichungstag und Bekanntmachung des Hinweises auf die Patenterteilung: **23.10.2002**
(21) Anmeldenummer: 97113622.1
(22) Anmeldetag: 07.08.1997
(51) Int. Cl.: F16B 25/10, B21H 3/02

(54) **Schraube mit einer selbstbohrenden Spitze**
Screw having a self drilling point
Vis ayant une pointe autoperçante

(30) Priorität: 15.08.1996 DE 19632838
(43) Veröffentlichungstag der Anmeldung: 18.02.1998
(73) Patentinhaber: Adolf Würth GmbH & Co. KG, 74653 Künzelsau (DE)
(72) Erfinder: Schuster, Armin, 74670 Forchtenberg (DE)
(74) Vertreter: Patentanwälte Ruff, Wilhelm, Beier, Dauster & Partner

(56) Entgegenhaltungen:
- EP-A- 0 142 037
- EP-A- 0 319 812
- DE-A- 1 484 198
- DE-A- 3 440 675
- DE-A- 4 310 938
- PATENT ABSTRACTS OF JAPAN vol. 095, no. 008, 29.September 1995 & JP 07 127616 A (MURATA SANGYO KK), 16.Mai 1995,

## Beschreibung

Schrauben, die insbesondere im Handwerk und in der Industrie verwendet werden, sollen nicht nur eine sichere Befestigung ermöglichen, sondern auch schnell eingeschraubt werden können. Dafür ist es aber Voraussetzung, daß sie zunächst in das Material, in das sie eingeschraubt werden sollen, greifen. Es kann sich hierbei um Holz oder auch holzähnliche Materialien handeln, beispielsweise Spanplatten, die u.U. mit einer Kunststoffbeschichtung versehen sind.

Damit die Schrauben schneller greifen, sind verschiedene Maßnahmen vorgeschlagen worden. Eine Maßnahme besteht darin, der Schraube nach dem Walzen ihres Gewindes durch ein Schlagen in einem Gesenk eine echte Bohrspitze anzuformen, die etwa die Form der Vorderseite eines Spiralbohrers aufweist. Solche Schrauben sind in erster Linie für Blech bestimmt, können aber auch bei härterem Holz Anwendung finden. Der Nachteil dieser Art von Schrauben ist ihr erhöhter Herstellungspreis, da das Kaltschlagen der Bohrspitze einen zusätzlichen Arbeitsgang erfordert.

Eine zweite Vorgehensweise zur Erleichterung des Einschraubens besteht darin, den Gewindegang oder von zwei Gewindegängen einen Gewindegang bis möglichst exakt an die Bohrspitze auszubilden. Dann kann die Schraube sehr schnell greifen und sich dadurch schnell einschrauben. Diese Art der Ausbildung hat den Vorteil, daß kein zusätzlicher Arbeitsgang bei der Herstellung erforderlich ist. Es besteht jedoch der Nachteil, daß aufgrund der Verdrängung des Materials durch die Kegelform des Schraubenspitzenbereiches das Material, in das die Schraube eingeschraubt wird, etwas reißt. Dies stört in all den Fällen nicht, wo dieses Material nicht sichtbar ist, beispielsweise dann, wenn es von einem Beschlag oder von einer Lattenkonstruktion überdeckt wird.

Beim Anschrauben von Beschlägen an Holzoberflächen, die anschließend sichtbar bleiben, stören diese Risse jedoch optisch.

Es ist bereits eine Schraube mit einer Bohrspitze bekannt (US-PS 39 37 120), die für Metallverbindungen gedacht ist. Die Schraube ist gewalzt, und die Bohrspitze ist geschmiedet.

Weiterhin bekannt ist eine Schraube (US-PS 43 23 326), die zwei durch Walzen hergestellte Schneidkanten aufweist. Die Schneidkanten werden von den Seitenflächen des Gewindes gebildet, stehen also gegenüber der Außenkontur des Schaftes bzw. der Spitze nach außen vor.

Bei einer weiteren bekannten Schraube (US-PS 45 72 720) weist die Spitze der Schraube die Form einer dreiseitigen Pyramide mit scharfen Kanten auf.

Bei einer weiteren Schraube (US-PS 48 74 278) ist im Übergangsbereich zwischen dem zylindrischen Schaft und der sich verjüngenden Spitze der Schraube das Gewinde unterbrochen und durch einige schräg verlaufende Rippen ersetzt.

Es ist weiterhin eine Schraube bekannt (DE 3440675 A1), die als selbstschneidende Schraube ausgebildet ist. An dem Spitzenabschnitt des Schraubenschafts ist eine Vielzahl von Schneidgewindegängen vorgesehen, wobei die Grenzlinie zwischen der Widerstandsflanke des Schneidschraubengewindes und dem Schaft zur Schraubenspitze steiler ist als die Schneidlinie des Gewindeschneidganges. Es ist eine Hinterschneidung an der Widerstandsflanke vorgesehen.

Der Erfindung liegt die Aufgabe zugrunde, eine selbstbohrende Schraube zu schaffen, die bei günstigen Herstellungskosten und einfacher Herstellung ein schnelles Einschrauben ermöglicht, ohne daß die Gefahr des Reißens des Holzes besteht.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die von der Erfindung vorgeschlagene Schraube hat den Vorteil, daß sie sich einfach und kostengünstig herstellen läßt. Die Schneidkante wird im gleichen Arbeitsgang wie das Gewinde angewalzt. Es braucht also nur ein für die Herstellung der Schraube sowieso benötigtes Werkzeug modifiziert zu werden. Das Vorsehen der Schneidkante führt aber dazu, daß beim Einschrauben zunächst durch die Schneidkante ein Loch durch Entfernen von Bohrmehl geschaffen wird, so daß anschließend die Gefahr des Reißens durch eine radiale Verdrängung nicht mehr besteht.

Besonders günstig ist es, wenn die Schraube in ihrem Spitzenbereich zwei diametral angeordnete Schneidkanten aufweist.

Erfindungsgemäß kann in Weiterbildung vorgesehen sein, daß die Schneidkante in der Mantellinie der Schraubenspitze liegt.

Damit die Möglichkeit des Bohrens gleich zu Beginn besonders günstig ist, schlägt die Erfindung in Weiterbildung vor, daß die Schneidkante direkt an der Spitze der Schraube beginnt.

In Weiterbildung der Erfindung kann vorgesehen sein, daß sich das Gewinde nur bis in einen Teil des Spitzenbereiches hinein erstreckt. Damit wird erreicht, daß zu Beginn des Einschraubvorganges tatsächlich zunächst nur ein Bohren erfolgt und erst nach der Herstellung eines Lochs mit einem bestimmten Durchmesser der durch das Gewinde bewirkte Vorschub eintritt.

Die Schneidkanten können sich jedoch, wie von der Erfindung in Weiterbildung vorgeschlagen wird, bis über den Beginn des Gewindes hinaus über den gesamten Spitzenbereich erstrecken.

Insbesondere kann vorgesehen sein, daß die Schneidkante im Bereich des Übergangs zu dem zylindrischen Schaftbereich endet.

Es ist aber ebenfalls möglich und wird von der Erfindung vorgeschlagen, daß die Schneidkante von der Kante eines Steilgewindes gebildet ist. Ein solches Steilgewinde läßt sich beim Walzen des Gewindes in der gleichen Weise mit auswalzen wie das Gewinde selbst. Unter Steilgewinde ist ein Gewinde zu verstehen, bei dem die Schraubensteigung beispielsweise 60° beträgt, also so steil ist, daß ein Einschraubvorgang gar nicht möglich ist.

Auch bei dieser Art der Ausbildung der Schneidkante kann vorgesehen sein, daß dieses Steilgewinde direkt an der Schraubenspitze beginnt.

Erfindungsgemäß kann vorgesehen sein, daß zwischen dem Schraubenspitzenbereich und dem das Schraubengewinde aufweisenden Schaft ein Zwischenabschnitt vorgesehen ist, der ebenfalls zylindrisch ausgebildet ist. Er geht dann in Form eines Kegelstumpfes in den Schraubenschaft über.

Hierbei kann vorgesehen sein, sich die Schneidkante bis in den Übergangsbereich zwischen dem zylindrischen Zwischenabschnitt und dem zylindrischen Schraubenschaft erstreckt.

Ein solcher Zwischenabschnitt kann insbesondere eine Führung beim Einschrauben der Schraube bewirken.

Erfindungsgemäß kann vorgesehen sein, daß im Schraubenspitzenbereich ein übliches Schraubengewinde vorhanden ist, das im Zwischenabschnitt aufhört und im Schraubenschaft wieder beginnt. Dann kann im Zwischenabschnitt die Schneidkante oder das die Schneidkante bildende Steilgewinde vorhanden sein. In diesem Fall wird zwar zu Beginn des Einschraubens noch kein Loch geformt, sondern zunächst ein Einschrauben durchgeführt. Dies erfolgt allerdings nur ganz zu Anfang, so daß, sobald die Schraube einigermaßen gefaßt hat, dann im Zwischenabschnitt die Schneidkante wirksam wird, die dann die Aufgabe des Vergrößerns des Bohrloches ohne Materialverdrängung übernimmt.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: die Seitenansicht des vorderen Bereiches einer Schraube nach der Erfindung;
- Fig. 2: eine der Fig. 1 entsprechende Darstellung einer nochmals weiteren Ausführungsform;
- Fig. 3 und 4: Seitenansichten des vorderen Bereiches einer Schraube nach der Erfindung bei weggelassenem Gewinde;
- Fig. 5: eine Aufsicht auf das vordere Ende einer Schraube der Fig. 3 und 4;
- Fig. 6 und 7: den Fig. 3 und 4 entsprechende Darstellungen einer weiteren Ausführungsform der von der Erfindung vorgeschlagenen Schraube;
- Fig. 8: einen Querschnitt durch das vordere Ende der Schraube der Fig. 6 und 7.

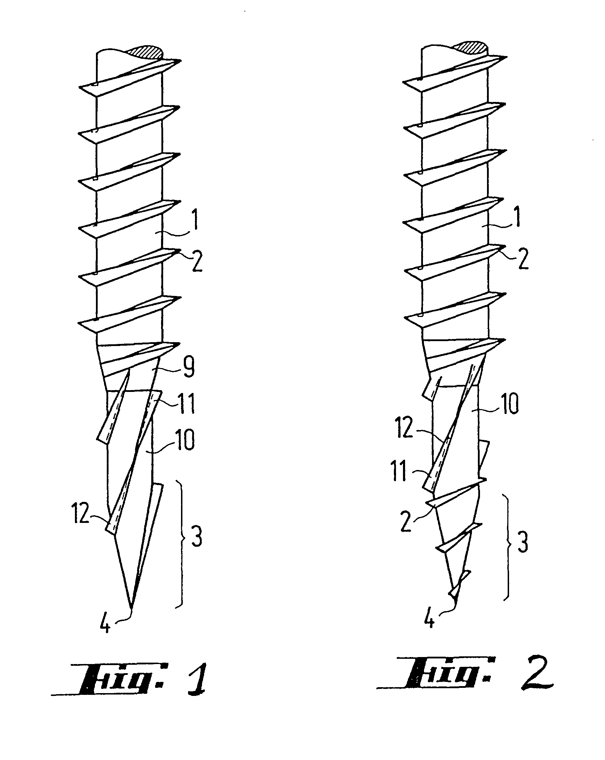

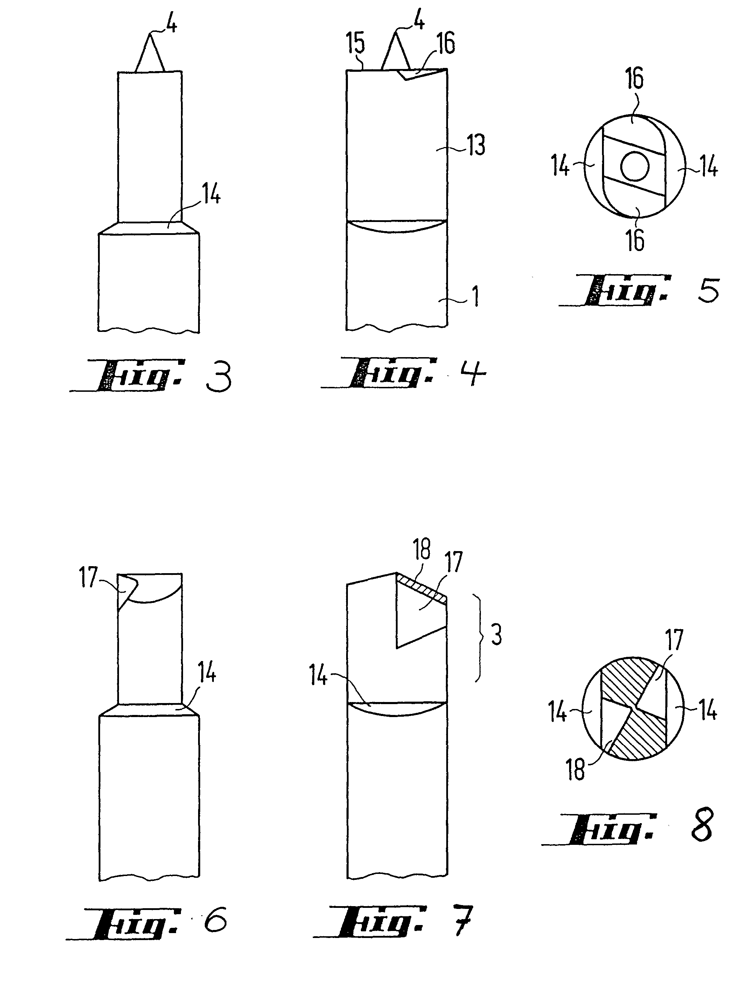

Die Fig. 1 und 2 zeigen erfindungsgemäß ausgebildete Schrauben, bei denen die Schneidkante von einem Steilgewinde gebildet wird.

Bei der Schraube der Ausführungsform nach Fig. 1 setzt sich der Schraubenschaft 1 mit dem Schraubenschaftgewinde 2 zunächst über einen kegelstumpfförmigen Übergangsbereich 9 in einen Zwischenabschnitt 10 über, der ebenfalls zylindrische Außenform aufweist und koaxial zum Schraubenschaft 1 verläuft. Erst an dem Ende des zylindrischen Zwischenabschnittes 10 beginnt der Schraubenspitzenbereich 3.

In dem Schraubenspitzenbereich und dem Zwischenabschnitt 10 ist an die Schraube ein Steilgewinde 11 angewalzt, dessen Gewindegänge gegenüber der Längsachse einen spitzen Winkel von etwa 30° einschließen. Die scharfkantige Spitze des Steilgewindes 11 bildet eine Schneidkante 12, die sich von der Schraubenspitze 4 bis zum Übergangsbereich 9 zwischen dem zylindrischen Zwischenabschnitt 10 und dem Schraubenschaft 1 erstreckt. Auch diese Art der Schneidkante 12 kann beim Walzen des Schraubengewindes mitgewalzt werden.

Fig. 2 zeigt eine ähnliche Grundform der Schraube, bei der wiederum ein zylindrischer Zwischenabschnitt 10 gebildet ist, der zwischen dem Schraubenspitzenbereich 10 und dem Schraubenschaft 1 liegt.

Im Schraubenspitzenbereich 3 weist die Schraube ein normales Schraubengewinde 2 auf, das die gleiche Steigung aufweist wie das Schraubengewinde 2 des Schraubenschaftes 1. Dieses Spitzengewinde 2 endet am Beginn des Zwischenabschnittes 10. Im Zwischenabschnitt 10 selbst ist wieder ein Steilgewinde 11 ausgewalzt, das eine Schneidkante 12 bildet.

Bei der Schraube nach Fig. 2 wird also beim Vorgang des Einschraubens zunächst ein Vorschub durch das Anfangsgewinde 2 erzeugt, so daß eine gewisse Materialverdrängung auftritt. Diese Materialverdrängung endet aber schon, bevor der eigentliche Schraubenschaft 1 in das Holz eindringt. Es kann also noch keine Spreiz- oder Keilwirkung auftreten. Sobald der Zwischenabschnitt 10 in das Holz bzw. das verwendete Material eindringt, wird mit Hilfe der Schneidkante 12 das eventuell etwas verdichtete oder verdrängte Material herausgeschnitten bzw. herausgefräst, so daß später, wenn die Schraube vollständig eingeschraubt wird, wiederum die gleichen Effekte auftreten wie bei der Ausführungsform der Schraube nach der Fig. 1.

Fig. 3 und 4 zeigen jeweils eine Seitenansicht des vorderen Bereiches einer Schraube ähnlich der Schraube nach den Fig. 1 oder 2, jedoch ohne Darstellung des Gewindes. Fig. 4 zeigt die Ansicht aus einer um 90° versetzten Richtung. Die Schraube enthält, ausgehend von der Schraubenspitze 4, einen mittleren Bereich 13, wo die Querabmessung in der einen Richtung, siehe Fig. 4, dem Durchmesser des Schraubenschaftes 1 entspricht, während die Querabmessung in einer Richtung senkrecht hierzu, siehe Fig. 3, geringer ist. Die spezielle Form dieses Zwischenabschnittes 13 kann man der Fig. 5 entnehmen, die eine Stirnansicht der Schraube darstellt, in Fig. 3 und 4 von oben. Zwischen dem Zwischenabschnitt 13 und dem Schraubenschaft 1 sind beidseits leicht abfallende Schulterflächen 14 gebildet, deren Form aus Fig. 5 hervorgeht.

In der Stirnfläche 15 des Zwischenabschnittes 13 sind zwei schrägverlaufende Kerben 16 eingeformt.

Fig. 6 bis 8 zeigen ähnliche Ansichten einer weiteren Schraube, wobei in diesem Fall keine Spitze 4 gebildet ist. Der Spitzenbereich 3 dieser Schraube enthält zwei geschlagene Vertiefungen 17, deren Endbegrenzungskanten 18 Schneidkanten bilden. Auch hier sind aus Gründen der Vereinfachung die Gewindegänge nicht dargestellt.

## Patentansprüche

1. Schraube, mit
1.1 einem Schraubenkopf,
1.2 einem Schraubenschaft (1),
1.3 einem über mindestens einen Teil des Schraubenschaftes (1) aufgewalzten Schraubengewinde (2), sowie mit
1.4 einem Spitzenbereich (3),
1.4.1 der mindestens eine Schneidkante (12) aufweist, die
1.4.2 beim Walzen des Gewindes (2) mit gewalzt ist, **gekennzeichnet durch** einen zwischen dem Spitzenbereich (3) und dem Schraubenschaft (1) angeordneten, im wesentlichen zylindrischen Zwischenabschnitt (10), der etwa kegelstumpfförmig in den Schraubenschaft (1) übergeht, wobei der Spitzenbereich (3) ein Schraubengewinde (2) und der Zwischenabschnitt (10) die mindestens eine Schneidkante (12) aufweist.

2. Schraube nach Anspruch 1, mit zwei diametral angeordneten Schneidkanten (12).

3. Schraube nach einem der vorhergehenden Ansprüche, bei der die mindestens eine Schneidkante (12) in der Mantellinie des Schraubenspitzenbereiches (3) liegt.

4. Schraube nach einem der vorhergehenden Ansprüche, bei der die mindestens eine Schneidkante (12) an der Spitze (4) der Schraube beginnt.

5. Schraube nach einem der Ansprüche 1 bis 4, bei der die Schneidkante (12) von der Kante eines Steilgewindes (11) gebildet ist.

6. Schraube nach einem der vorhergehenden Ansprüche, bei der sich die Schneidkante (12) bis in den Übergang (9) von dem Zwischenabschnitt (10) in den Schraubenschaft (1) erstreckt.

7. Schraube nach einem der vorhergehenden Ansprüche, bei der sich die Schneidkante (12) über den gesamten Spitzenbereich (3) der Schraube erstreckt.

8. Schraube nach einem der vorhergehenden Ansprüche, bei der die Schneidkante (12) bis in den Bereich des Überganges von dem Spitzenbereich (3) der Schraube zu dem zylindrischen Bereich des Schaftes (1) der Schraube reicht.

## Claims

1. Screw, having
1.1 a screw head,
1.2 a screw shank (1),
1.3 a screw thread (2) rolled over at least part of the screw shank (1) and having
1.4 a point area (3),
1.4.1 provided with at least one cutting edge (12), which
1.4.2 is rolled during the rolling of the thread (2), **characterized by** a substantially cylindrical intermediate portion located between the point area (3) and the screw shank (1) and which passes in an approximately truncated cone-shaped manner into the screw shank (1), the point area (3) having a screw thread (2) and the intermediate portion (10) the at least one cutting edge (12).

2. Screw according to claim 1 with two diametrically positioned cutting edges (12).

3. Screw according to one of the preceding claims, wherein the at least one cutting edge (12) is located in the generatrix of the screw point area (3).

4. Screw according to one of the preceding claims, wherein the at least one cutting edge (12) starts at the screw point (4).

5. Screw according to one of the claims 1 to 4, wherein the cutting edge (12) is formed by the edge of a coarse thread (11).

6. Screw according to one of the preceding claims, wherein the cutting edge (12) extends into the transition (9) from the intermediate portion (10) into the screw shank (1).

7. Screw according to one of the preceding claims, wherein the cutting edge (12) extends over the entire point area (3) of the screw.

8. Screw according to one of the preceding claims, wherein the cutting edge (12) extends into the area of the transition from the screw point area (3) to the cylindrical area of the screw shank (1).

## Revendications

1. Vis comprenant
1.1 une tête de vis
1.2 une tige de vis (1)
1.3 un filet de vis (2) laminé sur au moins une partie de la tige de vis (1), comprenant également
1.4 une zone pointue (3),
1.4.1 qui présente au moins un bord taraudeur (12) lequel
1.4.2. est laminé en même temps que le laminage du filet (2), **caractérisé par** une section intermédiaire (10) sensiblement cylindrique disposée entre la zone pointue (3) et la tige de vis (1), qui se continue par la tige de vis (1) en une forme tronconique, la zone pointue (3) présentant un filet de vis (2) et la portion intermédiaire (10) présente au moins le bord taraudeur (12).

2. vis selon la revendication 1 comprenant deux bords taraudeurs (12) diamétralement opposés

3. Vis selon l'une des revendications précédentes, où au moins un bord taraudeur (12) se trouve dans la ligne d'enveloppe de la zone de la pointe de vis (3).

4. Vis selon l'une des revendications précédentes, où au moins un bord taraudeur (12) commence à la pointe de la vis (4).

5. Vis selon l'une des revendications 1 à 4, où le bord taraudeur (12) est constitué par le bord d'un filet à angles obtus (11).

6. Vis selon l'une des revendications précédentes, où le bord taraudeur (12) s'étend jusqu'à la transition (9) entre la portion intermédiaire (10) et la tige de vis (1).

7. Vis selon l'une des revendications précédentes, où le bord taraudeur (12) s'étend sur l'ensemble de la zone pointue (3) de la vis.

8. Vis selon l'une des revendications précédentes, où le bord taraudeur (12) s'étend jusque dans la zone de transition entre la zone pointue (3) de la vis et la zone cylindrique de la tige (1) de la vis.
